(19) **Europäisches Patentamt / European Patent Office / Office européen des brevets**

(11) **EP 4 423 462 B1**

(12) **EUROPÄISCHE PATENTSCHRIFT**

(45) Veröffentlichungstag und Bekanntmachung des Hinweises auf die Patenterteilung:
**17.06.2026 Patentblatt 2026/25**

(21) Anmeldenummer: **22809392.8**

(22) Anmeldetag: **25.10.2022**

(51) Internationale Patentklassifikation (IPC):
*G01F 1/36* (2006.01)    *G01F 1/40* (2006.01)
*G01F 1/74* (2006.01)    *G01F 1/88* (2006.01)
*G01F 15/04* (2006.01)

(52) Gemeinsame Patentklassifikation (CPC):
**G01F 1/363; G01F 1/40; G01F 1/74; G01F 1/88; G01F 15/043**

(86) Internationale Anmeldenummer:
**PCT/EP2022/079814**

(87) Internationale Veröffentlichungsnummer:
**WO 2023/072949 (04.05.2023 Gazette 2023/18)**

(54) **VERFAHREN ZUM ERMITTELN EINES MASSENANTEILS DER GASPHASE UND/ODER DER MASSENDURCHFLUSSRATE DER GASPHASE, EINES IN EINEM MESSROHR STRÖMENDEN MEHRPHASIGEN MEDIUMS MIT EINER FLÜSSIGKEITSPHASE UND EINER GASPHASE UND MESSAUFNEHMER DAFÜR**

METHOD FOR DETERMINING A GAS PHASE MASS FRACTION AND/OR GAS PHASE MASS FLOW RATE, OF A MULTI-PHASE MEDIUM COMPRISING A LIQUID PHASE AND A GAS PHASE FLOWING IN A MEASURING TUBE, AND MEASURING SENSOR FOR THIS PURPOSE

PROCÉDÉ POUR DÉTERMINER UNE FRACTION MASSIQUE DE LA PHASE GAZEUSE ET/OU DU DÉBIT MASSIQUE DE LA PHASE GAZEUSE, D'UN MILIEU À PHASES MULTIPLES CIRCULANT DANS UN TUBE DE MESURE, COMPRENANT UNE PHASE LIQUIDE ET UNE PHASE GAZEUSE, ET CAPTEUR DE MESURE CORRESPONDANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **26.10.2021 DE 102021127850**

(43) Veröffentlichungstag der Anmeldung:
**04.09.2024 Patentblatt 2024/36**

(73) Patentinhaber: **Endress+Hauser Flowtec AG**
**4153 Reinach (CH)**

(72) Erfinder:
• **HÖCKER, Rainer**
**79761 Waldshut (DE)**
• **HERSBERGER, Carsten**
**4058 Basel (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
CN-A- 104 266 702    CN-A- 110 793 585
US-A- 5 814 738    US-A1- 2005 188 771
US-A1- 2011 259 119    US-A1- 2014 069 208

**Beschreibung**

Die vorliegende Erfindung betrifft ein Verfahren zum Ermitteln eines Masseanteils der Gasphase, eines in einem Messrohr strömenden mehrphasigen Mediums mit einer Flüssigkeitsphase und einer Gasphase und Messaufnehmer dafür.

Es ist bekannt, einen Massestrom eines mehrphasigen Mediums mittels Differenzdruckmessungen zu charakterisieren, wie beispielsweise in der amerikanischen Patentanmeldung US 2011/0259119 A1 offenbart ist, welche eine Ermittlung es Lockhart-Martinelli Parameters, durch Messung zweier Druckabfälle in einer V-Cone Anordnung lehrt, wobei die erste Messung die V-Cone Spitze mit einbezieht und die zweite Messung mehrere Rohrdurchmesser beabstandet im Nachlauf zum V-Cone erfolgt.

Einerseits verschenkt die Lehre des obigen Stands der Technik Messgenauigkeit und andererseits erfordert sie große Bauformen der Messanordnung. Es ist die Aufgabe der vorliegenden Erfindung, hier Abhilfe zu schaffen. Die Aufgabe wird erfindungsgemäß gelöst durch das Verfahren gemäß dem unabhängigen Patentanspruch 1 und die Vorrichtung gemäß dem unabhängigen Patentanspruch 8.

Das erfindungsgemäße Verfahren dient zum Ermitteln eines Masseanteils der Gasphase und/oder der Massedurchflussrate der Gasphase, eines in einem Messrohr strömenden mehrphasigen Mediums mit einer Flüssigkeitsphase und einer Gasphase, wobei das Medium beispielsweise einen Dampf, insbesondere Sattdampf aufweist, wobei das Messrohr eine von dem Medium angeströmte Abrisskante und mindestens drei Druckabgriffspunkte aufweist, wobei der Einfluss der Abrisskante auf die Strömung des Mediums an den mindestens drei Druckabgriffspunkten unterschiedlich ist, wobei das Verfahren umfasst: Ermitteln eines ersten Druckabfalls zwischen einem ersten und einem zweiten der mindestens drei Druckabgriffspunkte, die jeweils mit dem strömenden Medium beaufschlagt sind; Ermitteln eines zweiten Druckabfalls zwischen zwei Druckabgriffspunkten die jeweils mit dem strömenden Medium beaufschlagt sind, wobei einer der Druckabgriffspunkte zum Ermitteln des zweiten Druckabfalls ein dritter der mindestens drei Druckabgriffspunkte ist; und Ermitteln eines Werts des Masseanteils der Gasphase und/oder eines Werts der Massedurchflussrate der Gasphase in Abhängigkeit von dem ersten Druckabfall und dem zweiten Druckabfall, wobei der erste Druckabgriffspunkt, in Strömungsrichtung des Mediums vor der Abrisskante angeordnet ist, wobei sowohl der zweite Druckabgriffspunkt als auch der dritte Druckabgriffspunkt bezogen auf die Strömungsrichtung hinter der Abrisskante positioniert sind,

wobei der zweite Druckabgriffspunkt in einem Oberflächenabschnitt eines Festkörpers angeordnet ist, dessen Normalenvektor mit einer Längsachse des Messrohrs einen Winkel von nicht mehr als 30°, beispielsweise nicht mehr als 15° und insbesondere nicht mehr als 5° einschließt, und wobei der dritte Druckabgriffspunkt in einem Oberflächenabschnitt eines Festkörpers angeordnet ist, dessen Normalenvektor mit einem Querschnitt durch das Messrohr am Ort des dritten Druckabgriffspunks einen Winkel von nicht mehr als 20°, beispielsweise nicht mehr als 10° und insbesondere nicht mehr als 5° einschließt, wobei der zweite Druckabgriffspunkt bei oder nahe der Position eines Druckminimums positioniert ist, so dass der Druck am zweiten Druckabgriffspunkt, nicht mehr als 10%, insbesondere nicht mehr als 5% des Druckabfalls zwischen dem ersten Druckabgriffspunkt und dem zweiten Druckabgriffspunkt oberhalb des Druckminimums beträgt.

Die Position des Druckminimums kann beispielsweise im Zentrum des Srömungsschattens eines V-Cones oder im Strömungsschatten einer radialen Stufe einer Rohraufweitung liegen.

Erfindungsgemäß ist der dritte Druckabgriffspunkt in Strömungsrichtung nach dem zweiten Druckabgriffspunkt bei oder nahe der Position eines Druckmaximums, insbesondere des nächsten Druckmaximums positioniert, so dass der Druck am zweiten Druckabgriffspunkt, nicht mehr als 6%, insbesondere nicht mehr als 3% des Druckabfalls zwischen dem ersten Druckabgriffspunkt und dem zweiten Druckabgriffspunkt unterhalb des Druckmaximums beträgt.

Die Position des Druckmaximums kann insbesondere an der Rohrwand mit keinem oder geringem axialen Versatz gegenüber der Position des Druckminimums auftreten.

In einer Weiterbildung der Erfindung erfolgt das Ermitteln des Werts des Masseanteils der Gasphase und/oder der Massedurchflussrate in Abhängigkeit von einer streng monotonen Funktion eines Verhältnisses des ersten Druckabfalls zum zweiten Druckabfall erfolgt. Diese streng monotone Funktion des Verhältnisses des ersten Druckabfalls zum zweiten Druckabfall kann beispielsweise das Verhältnis selbst sein, der Logarithmus davon, oder eine Differenz der beiden Druckabfälle geteilt durch die Summe der beiden Druckabfälle. Wie die Funktion genau aussieht, spielt keine Rolle, solange sie eine eineindeutige Beziehung zum Quotienten des ersten Druckabfalls geteilt durch den zweiten Druckabfall definiert.

Im Zusammenhang mit der vorliegenden Erfindung wurden für verschiedene Masseanteile einer Gasphase an einem Gas-Flüssigkeitsgemisch bei verschiedenen Massedurchflussraten für verschiedene Messaufnehmertypen erste Druckabfälle und zweite Druckabfälle ermittelt, die daraus ermittelten Quotienten sind abhängig vom Masseanteil der Gasphase und im Wesentlichen unabhängig von der Durchflussrate. Damit kann der Masseanteil der Gasphase anhand des Quotienten oder einer davon streng monoton abhängigen Funktion ermittelt werden.

In einer Weiterbildung der Erfindung umfasst das Verfahren das Ermitteln der Massedurchflussrate der Gasphase, welche als Funktion mindestens eines der Druckabfälle, eines Dichtewerts der Gasphase, sowie entweder des Masseanteils der Gasphase oder einer streng monotonen Funktion eines Verhältnisses des ersten Druckabfalls zum zweiten Druckabfall ermittelt wird.

Die Massedurchflussrate lässt sich hier beispielsweise als Produkt aus einem Basisterm ausdrücken, welcher proportional ist zur kinetischen Energie der Gasphase und aus einem Verlustfaktor, welcher Verluste durch Reibung und Wirbelabriss beschreibt. Der Basisterm hängt dabei in an sich bekannter Weise vom Druckverlust und dem Dichtewert der Gasphase ab. Der Basisterm wird insbesondere als proportional zur Wurzel des Produkts aus einem der Druckabfälle und einem Dichtewert der Gasphase bestimmt. Weiterhin gehen die geometrischen Verhältnisse des Messaufnehmers in den Basisterm ein.

Der Verlustfaktor weist eine Abhängigkeit vom Masseanteil der Gasphase oder einer streng monotonen Funktion eines Verhältnisses des ersten Druckabfalls zum zweiten Druckabfall auf und ist typspezifisch für verschiedene Messaufnehmer zu ermitteln.

In einer Weiterbildung der Erfindung wird die Massedurchflussrate der Gasphase weiterhin in Abhängigkeit der Froude-Zahl der Gasphase ermittelt. Die Froude-Zahl hat ebenfalls Einfluss auf den Verlustfaktor und kann als weiterer Parameter bei der typspezifischen Ermittlung der Verlustfaktoren berücksichtigt werden.

In einer Weiterbildung der Erfindung wird der Dichtewert der Gasphase auf Basis einer Absolutdruckmessung und, falls es sich nicht um Sattdampf handelt, einer Temperaturmessung, insbesondere am ersten Druckabgriffspunkt bestimmt, an dieser Position ist die Druckmessung noch nicht durch die Wirkung der Abrisskante beeinträchtigt und sollte einen repräsentativen Druckmesswert für die Gasphase in dem Messrohr ergeben.

Durch die obigen Positionierungen wird die größtmögliche Empfindlichkeit für die Ermittlung des Masseanteils der Gasphase erzielt. Positionierungen des dritten Druckabgriffspunkts im Abstand mehrerer Durchmesser zur Abrisskante, wie beispielsweise in US 2011/0259119 A1, liegen dagegen weit hinter dem Maximum und verschenken somit Empfindlichkeit und Messgenauigkeit.

Der Verdrängerkörper kann insbesondere im wesentlichen rotationssymmetrisch bezüglich der Messrohrlängsachse und insbesondere als V-Cone ausgebildet sein.

Der erfindungsgemäße Messaufnehmer zum Ermitteln eines Masseanteils der Gasphase und/oder der Massedurchflussrate der Gasphase eines in einem Messrohr strömenden mehrphasigen Mediums mit einer Flüssigkeitsphase und einer Gasphase, insbesondere zur Durchführung des erfindungsgemäßen Verfahrens umfasst: ein Messrohr, welches einen Messrohrkörper mit einer inneren Mantelfläche aufweist, welche innere Mantelfläche ein Lumen zum Führen des strömenden Mediums begrenzt, wobei das Messrohr eine Längsrichtung Z aufweist, in welcher das Mediums zu führen ist; eine Abrisskante, die in dem Lumen angeordnet ist; mindestens drei Druckabgriffspunkte, deren Positionen bezüglich der Abrisskante sich wechselseitig unterscheiden; mehrere Drucksensoren zum Erfassen von Druckmesswerten an jeweils einem der Druckabgriffspunkte und/oder zum Erfassen von Druckdifferenzen zwischen jeweils zwei der Druckabgriffspunkte; eine Mess- und Betriebsschaltung, die eingerichtet ist zum Ermitteln eines ersten Druckabfalls zwischen einem ersten und einem zweiten der mindestens drei Druckabgriffspunkte, die jeweils mit dem strömenden Medium beaufschlagt sind; zum Ermitteln eines zweiten Druckabfalls zwischen zwei Druckabgriffspunkten die jeweils mit dem strömenden Medium beaufschlagt sind, wobei einer der Druckabgriffspunkte zum Ermitteln des zweiten Druckabfalls ein dritter der mindestens drei Druckabgriffspunkte ist; und zum Ermitteln eines Werts des Masseanteils der Gasphase und/oder der Massedurchflussrate der Gasphase des Mediums in Abhängigkeit von dem ersten Druckabfall und dem zweiten Druckabfall unter Annahme eines mehrphasigen Mediums, welches eine Flüssigkeitsphase und eine Gasphase enthält, wobei der erste Druckabgriffspunkt, bezogen auf eine Messrohrlängsrichtung in Strömungsrichtung vor der Abrisskante angeordnet ist, wobei sowohl der zweite Druckabgriffspunkt als auch der dritte Druckabgriffspunkt in Strömungsrichtung hinter der Abrisskante positioniert sind, wobei der zweite Druckabgriffspunkt in einem Oberflächenabschnitt eines Festkörpers angeordnet ist, dessen Normalenvektor mit einer Längsachse des Messrohrs einen Winkel von nicht mehr als 30°, beispielsweise nicht mehr als 15° und insbesondere nicht mehr als 5° einschließt, und wobei der dritte Druckabgriffspunkt in einem Oberflächenabschnitt eines Festkörpers angeordnet ist, dessen Normalenvektor mit einem Querschnitt durch das Messrohr am Ort des dritten Druckabgriffspunks einen Winkel von nicht mehr als 20°, beispielsweise nicht mehr als 10° und insbesondere nicht mehr als 5° einschließt, wobei der zweite Druckabgriffspunkt bei oder nahe der Position eines Druckminimums positioniert ist, so dass der Druck am zweiten Druckabgriffspunkt, nicht mehr als 10%, insbesondere nicht mehr als 5% des Druckabfalls zwischen dem ersten Druckabgriffspunkt und dem zweiten Druckabgriffspunkt oberhalb des Druckminimums beträgt, wobei der dritte Druckabgriffspunkt (116) in Messrohrlängsrichtung etwa an der gleichen Position wie der zweite Druckabgriffspunkt (114) liegt, wobei der zweite Druckabgriffspunkt bei oder nahe der Position eines Druckminimums für eine Strömung Re = 4000 mit dem Rohrdurchmesser als charakteristischer Länge positioniert ist, so dass der Druck am zweiten Druckabgriffspunkt, nicht mehr als 10%, insbesondere nicht mehr als 5% des Druckabfalls zwischen dem ersten Druckabgriffspunkt und dem zweiten Druckabgriffspunkt oberhalb des Druckminimums beträgt.

Erfindungsgemäß ist der dritte Druckabgriffspunkt ist in Strömungsrichtung nach dem zweiten Druckabgriffspunkt bei oder nahe der Position eines lokalen Druckmaximums für eine Strömung von Re = 4000 mit dem Rohrdurchmesser als charakteristischer Länge positioniert, so dass der Druck am zweiten Druckabgriffspunkt, nicht mehr als 6%, insbesondere nicht mehr als 3% des Druckabfalls zwischen dem ersten Druckabgriffspunkt und dem zweiten Druckabgriffspunkt unterhalb des Druckmaximums beträgt.

Die Erfindung wird nun anhand der in den Zeichnungen dargestellten Ausführungsbeispiele näher erläutert, es zeigt:

Fig. 1: eine schematische Darstellung eines ersten Ausführungsbeispiels eines Erfindungsgemäßen Messaufnehmers;

Fig. 2: ein exemplarisches Diagramm, welches den Masseanteil der Gasphase als Funktion des Quotienten der Druckabfälle darstellt;

Fig. 3: ein exemplarisches Diagramm, welches einen Dämpfungsfaktor als Funktion des Masseanteils der Gasphase und der Froude-Zahl darstellt;

Fig. 4: ein Flussdiagramm für ein Ausführungsbeispiel des Verfahrens zum Bestimmen des Masseanteils der Gasphase;

Fig. 5a: ein Flussdiagramm für ein Ausführungsbeispiel des Verfahrens zum Bestimmen der Massedurchflussrate der Gasphase; und

Fig. 5b: eine Modifikation des Ausführungsbeispiels des Verfahrens zum Bestimmen der Massedurchflussrate der Gasphase.

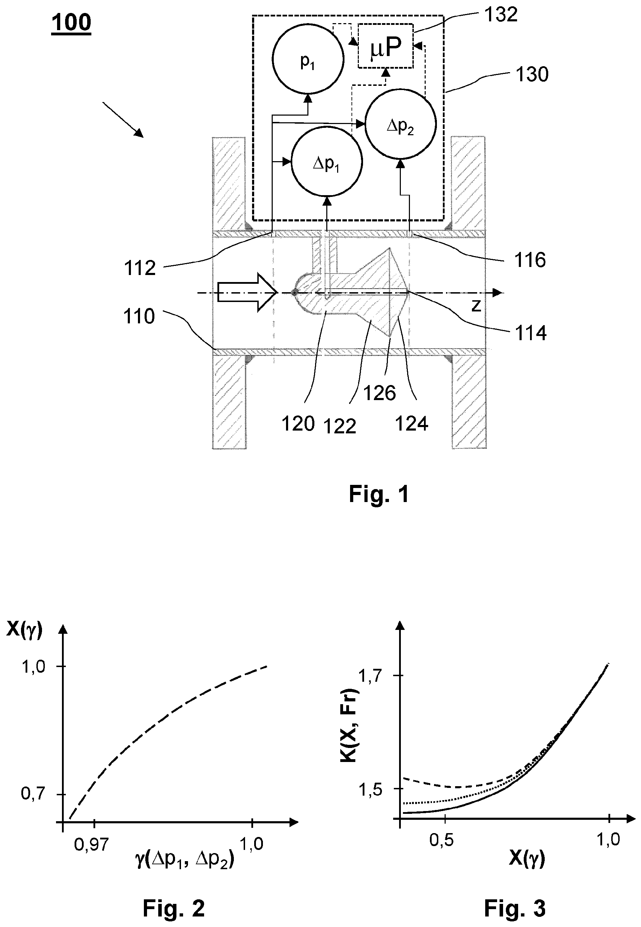

Das in Fig. 1 dargestellte erste Ausführungsbeispiel eines erfindungsgemäßen Messaufnehmrs 100 umfasst ein zylindrisches Messrohr 110, mit einem darin angebrachten Verdrängekörper 120, welcher hier in Form eines so genannten V-Cones gestaltet ist, d.h., der wirksame Teil des Verdrängerkörpers 120 umfasst einen ersten Kegelabschnitt 122 mit in Strömungsrichtung bzw. in Richtung der Messrohrlängsache Z zunehmendem Durchmesser und einen daran anschließenden zweiten Kegelabschnitt 124 mit in Strömungsrichtung Z abnehmendem Durchmesser. Der gemeinsame Umfang der beiden Kegelabschnitte 122, 124 bildet eine Abrisskante 126, an welcher sich Wirbel eines das Messrohr 110 durchströmenden Mediums ablösen. Der Messaufnehmer 100 weist in Strömungsrichtung Z vor dem Verdrängerkörper 120 einen ersten Druckabgriffspunkt 112 auf an den ein Absolutdruckmessgerät $p_1$ angeschlossen ist, welcher etwa einen Durchmesser des Messrohrs 110 von der Abrisskante 126 beabstandet, und von Effekten des Verdrängerkörpers weitgehend unbeeinflusst ist. Ein zweiter Druckabgriffspunkt 114 liegt an der Spitze des zweiten Kegelabschnitts 124, also im Strömungsschatten des Verdrängerkörpers 120 auf der Achse des Messrohrs. Am Ort des zweiten Druckabgriffspunkts 114 ist ein Druckminimum zu erwarten. Ein dritter Druckabgriffspunkt 116, liegt in Strömungsrichtung hinter der Abrisskante 126 an der Wand des Messrohrs 110. Der dritte Druckabgriffspunkt 116 liegt in Messrohrlängsrichtung etwa an der gleichen Position wie der zweite Druckabgriffspunkt 114.

An den zweiten bzw. dritten Druckabgriffspunkt sind ein erster Differenzdrucksensor $\Delta p_1$, und ein zweiter Differenzdrucksensor $\Delta p_2$, angeschlossen, die jeweils die Druckdifferenz zum ersten Druckabgriffspunkt erfassen. Der Messaufnehmer 100 weist weiterhin eine Mess- und Betriebsschaltung 130 auf zum Betreiben der Drucksensoren und zum Auswerten von deren Messwerten mittels eines Mikroprozessors 132, insbesondere gemäß dem erfindungsgemäßen Verfahren.

Das Diagramm in Fig. 2 zeigt als gestrichelte Linie den Masseanteil der Gasphase an der Gesamtmasse des strömenden Mediums in Abhängigkeit von einer Funktion $\gamma(\Delta p_1, \Delta p_2)$, welche definiert ist als $\gamma(\Delta p_1, \Delta p_2) = (\Delta p_1/\Delta p_2)^{0,5}$. Zum Erstellen der Kurve wurden definierte, nicht kondensierbare Massensströme eines Gases, insbesondere Luft, mit definierten Massenströmen einer Flüssigkeit bei Raumtemperatur mit unterschiedlichen Durchflussraten zu einer Vielzahl von Masseanteilen X der Gasphase gemischt und durch den zu charakterisierenden Messaufnehmer geleitet. Die resultierenden Druckabfälle $\Delta p_1$, $\Delta p_2$ wurden erfasst. Die vorgegebenen Masseanteile X wurden dann als Funktion von $\gamma(\Delta p_1, \Delta p_2)$ modelliert. Die Kurve 4 zeigt einen resultierenden Fit für $X(\gamma(\Delta p_1, \Delta p_2))$. Das entsprechende Modell ist im Messaufnehmer hinterlegt, womit die Möglichkeit gegeben ist. Im Messbetrieb auf Basis der beiden Druckabfälle $\Delta p_1$, $\Delta p_2$ den Masseanteil der Gasphase zu bestimmen. Dies ist insbesondere für die Charakterisierung von (Satt-)Dampfströmen, insbesondere in Kraftwerken von Interesse.

Zur Bestimmung der Massedurchflussrate eines strömenden Mediums mit einer Gasphase und einer Flüssigkeitsphase auf Basis einer Differenzdruckmessung ist eine Basis-Massedurchflussrate die unter Annahme eines verlustfreien Bernoulli-Effekts bestimmt wurde, mit einem Korrekturfaktor zu multiplizieren, welcher Druckverluste in Abhängigkeit von der Zusammensetzung des Mediums und der Froude-Zahl des Mediums berücksichtigt.

Das Diagramm in Fig. 3 zeigt solche Korrekturfaktoren, die für einen zu charakterisierenden Messaufnehmer anhand definierter Massenströme mit definierten Masseanteilen der Gasphase experimentell ermittelt wurden. Die gestrichelte Kurve entspricht einer Froude-Zahl von 140, die punktierte Kurve einer Froude-Zahl von 100 und die durchgezogene Kurve einer Froude-Zahl von 60.

Die Froude-Zahl Fr wurde für die verschiedenen Massenstrome bestimmt gemäß:

$$Fr = \frac{c_{sv,g}}{\sqrt{g \cdot h}}$$

Die Froude-Zahl wird mit einer Leerrohrgeschwindigkeit der Gasphase $c_{sv,g}$ vor dem Strömungshindernis und einer Spalthöhe h, als charakteristische Länge, gebildet. Die Leerrohrgeschwindigkeit der Gasphase wird unter der Annahme bestimmt, aus der Massedurchflussrate der Gasphase und deren Dichte unter der Annahme bestimmt, dass der Gesamte Rohrquerschnitt für die strömende Gasphase zur Verfügung steht. Die Spalthöhe ergibt sich beispielsweise für das erste Ausführungsbeispiel aus dem Rohrdurchmesser und dem Durchmesser des V-Cones an der Abrisskante.

$$h = \frac{D_{Rohr} - D_{VCone}}{2}$$

Die Basis-Massedurchflussrate dm/dt$_{g,b}$ der Gasphase nach Bernoulli beträgt für den Messaufnehmer des ersten Ausführungsbeispiels:

$$\dot{m}_{g,b} = \frac{A}{\sqrt{1 - \beta^4}} \cdot \sqrt{2 \cdot \rho(p_1) \cdot \Delta\mathrm{p}_1}$$

A bezeichnet dabei die engste Querschnitts-fläche, $\beta$ das Durchmesserverhältnis von Messrohr und V-Cone, und $\rho(p_1)$ die Dichte am ersten Druckabgriff.

Die tatsächliche Massedurchflussrate der Gasphase soll sich aus der Basis-Massedurchflussrate durch Multiplikation mit dem Korrekturfaktor $K_1$ ergeben.

$$\dot{m}_g = K_1(x, Fr) \cdot \dot{m}_{g,b}$$

Dem entsprechend sind bei einer Charakterisierung eines Messaufnehmers die Korrekturfaktoren K anhand vorgegebener tatsächlicher Massendurchflusraten und auf basis gemessener Basis-Massedurchflussraten zu ermitteln gemäß:

$$K_1(x, Fr) = \frac{\dot{m}_g}{\dot{m}_{g,b}}$$

Die ermittelten Korrekturfaktoren werden in einem Datenspeicher der Mess- und Betriebsschaltug eines Messaufnehmer hinterlegt.

Mit den zuvor beschriebenen Messaufnehmern und den ermittelten Daten zu deren Charakterisierung lassen sich die erfindungsgemäßen Verfahren durchführen, wie im Folgenden beschrieben sind.

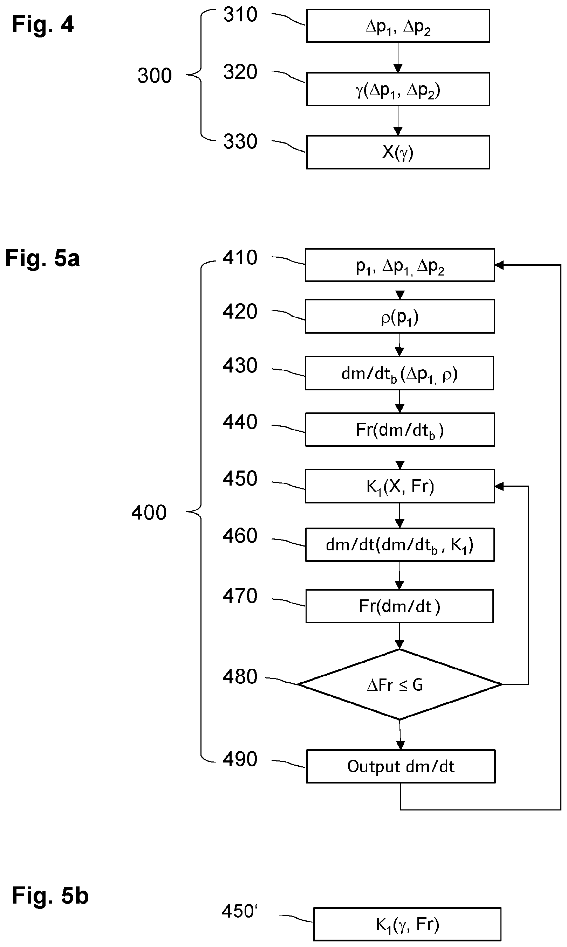

Das in Fig. 4 dargestellte Ausführungsbeispiel eines Verfahrens 300 zum Ermitteln des Masseanteils der Gasphase eines zweiphasigen Mediums, welches eine Flüssigkeitsphase und eine Gasphase enthält, und welches beispielsweise einen Messaufnehmer gemäß Fig.1 durchströmt, beginnt mit dem Erfassen 310 eines ersten Druckabfalls $\Delta p_1$ zwischen einem ersten Druck-abgriffspunkt und einem zweiten Druckabgriffspunkt, so-wie eines zweiten Druckabfalls $\Delta p_2$ zwischen dem ersten Druckabgriffspunkt und einem dritten Druckabgriffspunkt. Es folgt das Ermitteln 320 einer streng monotonen Funktion $\gamma(\Delta p_1, \Delta p_2)$ des ersten Druckabfalls und des zweiten Druckabfalls, die hier gegeben ist als Wurzel aus dem Quotienten $\Delta p_1 / \Delta p_2$. In einem abschließenden Schritt 330 folgt das Ermitteln des Masseanteils $X(\gamma(\Delta p_1, \Delta p_2)$ auf Basis eines hinterlegten Modells, wie es beispielsweise in Fig. 2 dargestellt ist.

Das in Fig. 5 dargestellte Ausführungsbeispiel eines Verfahrens 400 zum Ermitteln der Massedurchflussrate der Gasphase eines Sattdampfes, welcher eine Flüssigkeitsphase (Kondensat) und eine Gasphase enthält, und beispielsweise einen Messaufnehmer gemäß Fig.1 durchströmt, beginnt mit dem Erfassen 410 eines Absolutdrucks $p_1$ an einem ersten Druckabgriffspunkt der von einem Strömungshindernis unbeeinflusst ist, eines ersten Druckabfalls $\Delta p_1$ zwischen dem ersten Druckabgriffspunkt und einem zweiten Druckabgriffspunkt, sowie eines zweiten Druckabfalls $\Delta p_2$ zwischen dem ersten Druckabgriffspunkt und einem dritten Druckabgriffspunkt. Es folgt das Ermitteln 420 der Dichte der Gasphase $\rho(p_1)$. In einer Sattdampfanwendung ist die Dichtebestimmung auf Basis des Drucks ausreichend genau, für andere Medien ist ggf. eine zusätzliche Tem-peraturmessung am ersten Druckabgriffspunkt erforder-lich.

Mit Vorliegen der Dichte $\rho(p_1)$ und dem Druck-abfall $\Delta p_1$ sind die Voraussetzungen gegeben, zum Ermitteln 430 einer Basis-Massedurchflussrate für die Gasphase gemäß Bernoulli:

$$\dot{m}_{g,b} = \frac{A}{\sqrt{1 - \beta^4}} \cdot \sqrt{2 \cdot \rho(p_1) \cdot \Delta\mathrm{p}_1}$$

Die Basis-Massedurchflussrate ist jedoch nicht repräsentativ, da der gemessene Druckabfall $\Delta p_1$, durch die zweite Phase, hier Kondensat, beeinflusst ist. Dem Ermitteln eines Korrekturfaktors $K_1$ geht zunächst das Bestimmen 440 der Froude-Zahl voraus, welche auf Basis der Basis-Massedurchflussrate bestimmt wird.

Es folgt das Ermitteln 450 des Korrekturfaktors $K_1$ in Abhängigkeit von dem Masseanteil X der Gasphase X und der Froude-Zahl, wobei die Bestimmung des Masseanteils X der Gasphase wie beim Verfahren gemäß Fig. 4 erfolgt ist. Der Korrekturfaktor $K_1$ ergibt sich aus den ermittelten Eingangsgrößen anhand der modellierten Abhängigkeit, wie sie exemplarisch in Fig. 3 dargestellt ist.

Die tatsächliche Massedruchflussrate dm/dt der Gasphase ergibt sich durch Multiplikation 460 der Basis-Massedurchflussrate mit dem Korrekturfaktor $K_1$.

Auf Basis der tatsächlichen Massedruchflussrate dm/dt der Gasphase erfolgt ein erneutes Ermitteln 470 der Froude-Zahl.

Wenn ein anschließender Test 480 ergibt, dass die Froude-Zahl von der zuvor Berechneten Froude-Zahl um mehr als einen Grenzwert G abweicht, werden die Verfahrensschritte 450 ff iterativ wiederholt, bis eine neu ermittelte Froude-Zahl um nicht mehr als den Grenzwert G von der vorhergehenden Froude-Zahl abweicht. Dann wird ein tatsächlicher Wert der Massedurchflussrate ausgegeben, und das Verfahren beginnt wieder mit dem Erfassen neuer Eingangsgrößen.

Eine in Fig. 5b dargestellte Modifikation des Verfahrens gemäß Fig. 5a betrifft die Ermittlung des Korrekturfaktors $K_1$. Dieser kann nämlich ohne explizite Bestimmung des Masseanteils X der Gasphase auch als Funktion von $\gamma(\Delta p_1, \Delta p_2)$ und der Froude-Zahl in einem Schritt 450' berechnet werden.

## Patentansprüche

1. Verfahren (300, 400) zum Ermitteln eines Masseanteils der Gasphase und/oder der Massedurchflussrate der Gasphase, eines in einem Messrohr strömenden mehrphasigen Mediums mit einer Flüssigkeitsphase und einer Gasphase, wobei das Medium beispielsweise einen Dampf, insbesondere Sattdampf aufweist,

   wobei das Messrohr eine von dem Medium angeströmte Abrisskante und mindestens drei Druckabgriffspunkte aufweist, wobei der Einfluss der Abrisskante auf die Strömung des Mediums an den mindestens drei Druckabgriffspunkten unterschiedlich ist,
   wobei das Verfahren umfasst:

   Ermitteln eines ersten Druckabfalls (310; 410) zwischen einem ersten und einem zweiten der mindestens drei Druckabgriffspunkte, die jeweils mit dem strömenden Medium beaufschlagt sind;
   Ermitteln eines zweiten Druckabfalls (310; 410) zwischen zwei Druckabgriffspunkten die jeweils mit dem strömenden Medium beaufschlagt sind, wobei einer der Druckabgriffspunkte zum Ermitteln des zweiten Druckabfalls ein dritter der mindestens drei Druckabgriffspunkte ist; und
   Ermitteln eines Werts des Masseanteils (330) der Gasphase, und/oder der Massedurchflussrate (460) der Gasphase in Abhängigkeit von dem ersten Druckabfall und dem zweiten Druckabfall,
   wobei der erste Druckabgriffspunkt, in Strömungsrichtung des Mediums vor der Abrisskante angeordnet ist, und
   wobei sowohl der zweite Druckabgriffspunkt als auch der dritte Druckabgriffspunkt bezogen auf die Strömungsrichtung hinter der Abrisskante positioniert sind,
   wobei der zweite Druckabgriffspunkt in einem Oberflächenabschnitt eines Festkörpers angeordnet ist, dessen Normalenvektor mit einer Längsachse des Messrohrs einen Winkel von nicht mehr als 20°, beispielsweise nicht mehr als 10° und insbesondere nicht mehr als 5° einschließt, und wobei
   der dritte Druckabgriffspunkt in einem Oberflächenabschnitt eines Festkörpers, angeordnet ist, dessen Normalenvektor mit einem Querschnitt durch das Messrohr am Ort des dritten Druckabgriffspunks einen Winkel von nicht mehr als 20°, beispielsweise nicht mehr als 10° und insbesondere nicht mehr als 5° einschließt,
   wobei der zweite Druckabgriffspunkt bei oder nahe der Position eines Druckminimums positioniert ist, so dass der Druck am zweiten Druckabgriffspunkt, nicht mehr als 10%, insbesondere nicht mehr als 5% des Druckabfalls zwischen dem ersten Druckabgriffspunkt und dem zweiten Druckabgriffspunkt oberhalb des Druckminimums beträgt,
   **dadurch gekennzeichnet, dass** der dritte Druckabgriffspunkt in Messrohrlängsrichtung etwa an der gleichen Position wie der zweite Druckabgriffspunkt liegt, und dass
   der dritte Druckabgriffspunkt in Strömungsrichtung nach dem zweiten Druckabgriffspunkt bei oder nahe der Position eines Druckmaximums, insbesondere des nächsten positioniert ist, so dass der Druck am zweiten Druckabgriffspunkt, nicht mehr als 6%, insbesondere nicht mehr als 3% des Druckabfalls zwischen dem ersten Druckabgriffspunkt und dem zweiten Druckabgriffspunkt unterhalb des Druckmaximums beträgt.

2. Verfahren (300) nach Anspruch 1, wobei das Ermitteln des Werts des Masseanteils der Gasphase und/oder der Massedurchflussrate der Gasphase in Abhängigkeit von einer streng monotonen Funktion eines Verhältnisses des ersten Druckabfalls zum zweiten Druckabfall erfolgt.

3. Verfahren nach Anspruch 1 oder 2, weiterhin umfassend das Ermitteln der Massedurchflussrate der Gasphase, welche als Funktion mindestens eines der Druckabfälle, eines Dichtewerts der Gasphase, sowie entweder des Masseanteils der Gasphase oder einer streng monotonen Funktion eines Verhältnisses des ersten Druckabfalls zum zweiten Druckabfall ermittelt wird.

4. Verfahren (400) nach Anspruch 3, wobei die Massedurchflussrate der Gasphase weiterhin in Abhängigkeit der Froude-Zahl des Mediums ermittelt wird.

5. Verfahren nach Anspruch 3 oder 4, wobei die Massedurchflussrate als proportional zur Wurzel des Produkts aus einem der Druckabfälle und einem Dichtewert der Gasphase des Mediums bestimmt wird.

6. Verfahren nach Anspruch 5, wobei der Dichtewert der Gasphase auf Basis einer Absolutdruckmessung und ggf. einer Temperaturmessung, insbesondere am ersten Druckabgriffspunkt bestimmt wird.

7. Verfahren nach einem der vorhergehenden Ansprüche, wobei in dem Messrohr ein Verdrängerkörper angeordnet ist, wobei die Abrisskante in einer Querschnittsebene des Messrohrs mit einem maximalen Querschnittsumfang des Verdrängerkörpers verläuft.

8. Messaufnehmer (100) zum Ermitteln eines Masseanteils der Gasphase und/oder der Massedurchflussrate der Gasphase eines in einem Messrohr strömenden mehrphasigen Mediums mit einer Flüssigkeitsphase und einer Gasphase, insbesondere zur Durchführung eines Verfahrens nach einem der vorhergehenden Ansprüche, umfassend:

ein Messrohr (110), welches einen Messrohrkörper mit einer inneren Mantelfläche aufweist, welche innere Mantelfläche ein Lumen zum Führen des strömenden Mediums begrenzt, wobei das Messrohr eine Längsrichtung Z aufweist, in welcher das Mediums zu führen ist;
eine Abrisskante (126), die in dem Lumen angeordnet ist;
mindestens drei Druckabgriffspunkte (112, 114, 116), deren Positionen bezüglich der Abrisskante (126) sich wechselseitig unterscheiden;
mehrere Drucksensoren zum Erfassen von Druckmesswerten ($p_1$) an jeweils einem der Druckabgriffspunkte (112, 114, 116) und/oder zum Erfassen von Druckdifferenzen ($\Delta p_1$, $\Delta p_2$) zwischen jeweils zwei der Druckabgriffspunkte (112, 114, 116);
eine Mess- und Betriebsschaltung (130), die eingerichtet ist
zum Ermitteln eines ersten Druckabfalls ($\Delta p_1$) zwischen einem ersten und einem zweiten der mindestens drei Druckabgriffspunkte, die jeweils mit dem strömenden Medium beaufschlagt sind;
zum Ermitteln eines zweiten Druckabfalls ($\Delta p_2$) zwischen zwei Druckabgriffspunkten die jeweils mit dem strömenden Medium beaufschlagt sind, wobei einer der Druckabgriffspunkte zum Ermitteln des zweiten Druckabfalls ein dritter der mindestens drei Druckabgriffspunkte ist; und zum Ermitteln eines Werts des Masseanteils (X) und/oder der Massedurchflussrate der Gasphase des Mediums in Abhängigkeit von dem ersten Druckabfall und dem zweiten Druckabfall unter Annahme eines mehrphasigen Mediums, welches eine Flüssigkeitsphase und eine Gasphase enthält,
wobei der erste Druckabgriffspunkt, bezogen auf eine Messrohrlängsrichtung in Strömungsrichtung vor der Abrisskante angeordnet ist, und wobei sowohl der zweite Druckabgriffspunkt als auch der dritte Druckabgriffspunkt in Strömungsrichtung hinter der Abrisskante (126) positioniert sind,
wobei der zweite Druckabgriffspunkt in einem Oberflächenabschnitt eines Festkörpers angeordnet ist, dessen Normalenvektor mit einer Längsachse des Messrohrs einen Winkel von nicht mehr als 20°, beispielsweise nicht mehr als 10° und insbesondere nicht mehr als 5° einschließt, und wobei
der dritte Druckabgriffspunkt in einem Oberflächenabschnitt eines Festkörpers, angeordnet ist, dessen Normalenvektor mit einem Querschnitt durch das Messrohr am Ort des dritten Druckabgriffspunks einen Winkel von nicht mehr als 20°, beispielsweise nicht mehr als 10° und insbesondere nicht mehr als 5° einschließt,
wobei der zweite Druckabgriffspunkt (114) bei oder nahe der Position eines Druckminimums für eine Strömung mit Re = 4000 mit dem Rohrdurchmesser als charakteristischer Länge positioniert ist, so dass der Druck am zweiten Druckabgriffspunkt, nicht mehr als 10%, insbesondere nicht mehr als 5% des Druckabfalls zwischen dem ersten Druckabgriffspunkt und dem zweiten Druckabgriffspunkt oberhalb des Druckminimums beträgt,
**dadurch gekennzeichnet, dass** der dritte Druckabgriffspunkt (116) in Messrohrlängsrichtung etwa an der gleichen Position wie der zweite Druckabgriffspunkt (114) liegt, und dass der dritte Druckabgriffspunkt in Strömungsrichtung nach dem zweiten Druckabgriffspunkt bei oder nahe der Position eines lokalen Druckmaximums für eine Strömung von Re = 4000 mit dem Rohrdurchmesser als charakteristischer Länge positioniert ist, so dass der Druck am zweiten Druckabgriffspunkt, nicht mehr als 6%, insbesondere nicht mehr als 3% des Druckabfalls zwischen dem ersten Druckabgriffspunkt und dem zweiten Druckabgriffspunkt unterhalb des Druckmaximums beträgt.

## Claims

1. A method (300, 400) for determining a mass fraction of the gas phase and/or the mass flow rate of the gas phase of a multi-phase medium flowing in a measuring tube with a liquid phase and a gas phase, wherein the medium has a steam, for example, in particular saturated steam,

   wherein the measuring tube has a tear-off edge which the medium flows toward, and at least three pressure tapping points, wherein the effect of the tear-off edge on the flow of the medium differs at the at least three pressure tapping points,
   wherein the method comprises:

   Determining a first pressure drop (310; 410) between a first and a second of the at least three pressure tapping points, each of which is exposed to the flowing medium;
   Determining a second pressure drop (310; 410) between two pressure tapping points, each of which is exposed to the flowing medium, wherein one of the pressure tapping points for determining the second pressure drop is a third of the at least three pressure tapping points; and
   Determining a value of a mass fraction (330) of the gas phase and/or the mass flow rate (460) of the gas phase based on the first pressure drop and the second pressure drop,
   wherein the first pressure tapping point is arranged in front of the tear-off edge in the flow direction of the medium, and
   wherein both the second pressure tapping point and the third pressure tapping point are positioned behind the tear-off edge relative to the flow direction,
   wherein the second pressure tapping point is arranged in a surface section of a solid body whose normal vector creates, together with a longitudinal axis of the measuring tube, an angle not exceeding 20°, for example not exceeding 10°, and in particular not exceeding 5°, and wherein
   the third pressure tapping point is arranged in a surface section of a solid body whose normal vector creates, together with a cross-section through the measuring tube at the location of the third pressure tapping point, an angle not exceeding 20°, for example not exceeding 10°, and in particular not exceeding 5°,
   wherein the second pressure tapping point is located at or near the position of a pressure minimum, so that the pressure at the second pressure tapping point is equal to no more than 10%, in particular no more than 5%, of the pressure drop between the first pressure tapping point and the second pressure tapping point above the pressure minimum,
   characterized in that the third pressure tapping point is approximately located at the same position as the second pressure tapping point in the longitudinal direction of the measuring tube, and in that
   the third pressure tapping point downstream of the second pressure tapping point in the flow direction is located at or near the position of a pressure maximum, in particular the closest one, so that the pressure at the second pressure tapping point is equal to no more than 6%, in particular no more than 3%, of the pressure drop between the first pressure tapping point and the second pressure tapping point below the pressure maximum.

2. The method (300) as claimed in claim 1, wherein the value of the mass fraction of the gas phase and/or the mass flow rate of the gas phase is/are determined based on a strictly monotonic function of a ratio of the first pressure drop to the second pressure drop.

3. The method as claimed in claim 1 or 2, further comprising determining the mass flow rate of the gas phase, which is determined based on at least one of the pressure drops, a density value of the gas phase, and either the mass fraction of the gas phase or a strictly monotonic function of a ratio of the first pressure drop to the second pressure drop.

4. The method (400) as claimed in claim 3, wherein the mass flow rate of the gas phase is also determined based on the Froude number of the medium.

5. The method as claimed in claim 3 or 4, wherein the mass flow rate is determined proportionally to the root of the product from one of the pressure drops and a density value of the gas phase of the medium.

6. The method as claimed in claim 5, wherein the density value of the gas phase is determined on the basis of an absolute pressure measurement and, if necessary, a temperature measurement, in particular at the first pressure tapping point.

7. The method as claimed in one of the preceding claims, wherein a displacement body is arranged in the measuring tube, wherein the tear-off edge runs in a cross-sectional plane of the measuring tube with a maximum cross-sectional circumference of the displacement body.

**8.** A measuring transducer (100) for determining a mass fraction of the gas phase and/or the mass flow rate of the gas phase of a multi-phase medium flowing in a measuring tube with a liquid phase and a gas phase, in particular for carrying out a method as claimed in one of the preceding claims, comprising:

A measuring tube (110), which has a measuring tube body with an inner lateral surface, said inner lateral surface delimiting a lumen for conducting the flowing medium, wherein the measuring tube has a longitudinal direction Z in which the medium is to be conducted;

A tear-off edge (126), which is arranged in the lumen;

At least three pressure tapping points (112, 114, 116), whose positions relative to the tear-off edge (126) change depending on each other;

Multiple pressure sensors for detecting pressure measured values ($p_1$) at each of the pressure tapping points (112, 114, 116) and/or for detecting pressure differences ($\Delta p_1$, $\Delta p_2$) between two pressure tapping points (112, 114, 116) in each case;

A measuring and operating circuit (130), which is configured

to determine a first pressure drop ($\Delta p_1$) between a first and a second of the at least three pressure tapping points, each of which is exposed to the flowing medium;

to determine a second pressure drop ($\Delta p_2$) between two pressure tapping points, each of which is exposed to the flowing medium, wherein one of the pressure tapping points for determining the second pressure drop is a third of the at least three pressure tapping points; and

to determine a value of the mass fraction (X) and/or the mass flow rate of the gas phase of the medium based on the first pressure drop and the second pressure drop, assuming that the medium has multiple phases, including a liquid phase and a gas phase,

wherein the first pressure tapping point is arranged in front of the tear-off edge based on the longitudinal direction of the measuring tube in the flow direction, and

wherein both the second pressure tapping point and the third pressure tapping point are positioned behind the tear-off edge (126) in the flow direction,

wherein the second pressure tapping point is arranged in a surface section of a solid body whose normal vector creates, together with a longitudinal axis of the measuring tube, an angle not exceeding 20°, for example not exceeding 10°, and in particular not exceeding 5°, and

wherein the third pressure tapping point is arranged in a surface section of a solid body whose normal vector creates, together with a cross-section through the measuring tube at the location of the third pressure tapping point, an angle not exceeding 20°, for example not exceeding 10°, and in particular not exceeding 5°, wherein the second pressure tapping point (114) is located at or near the position of a pressure minimum for a flow where Re = 4000 with the tube diameter as the characteristic length, so that the pressure at the second pressure tapping point is equal to no more than 10%, in particular no more than 5%, of the pressure drop between the first pressure tapping point and the second pressure tapping point above the pressure minimum,

**characterized in that** the third pressure tapping point (116) is approximately located at the same position as the second pressure tapping point (114) in the longitudinal direction of the measuring tube, and **in that**

the third pressure tapping point downstream of the second pressure tapping point in the flow direction is located at or near the position of a local pressure maximum for a flow of Re = 4000 with the tube diameter as the characteristic length, so that the pressure at the second pressure tapping point is equal to no more than 6%, in particular no more than 3%, of the pressure drop between the first pressure tapping point and the second pressure tapping point below the pressure maximum.

**Revendications**

**1.** Procédé (300, 400) destiné à la détermination d'une fraction massique de la phase gazeuse et/ou du débit massique de la phase gazeuse d'un produit multiphasique s'écoulant dans un tube de mesure et comportant une phase liquide et une phase gazeuse, le produit comportant par exemple une vapeur, notamment une vapeur saturée,

le tube de mesure présentant un bord de rupture balayé par le produit et au moins trois points de prise de pression, l'influence du bord de rupture sur l'écoulement du produit étant différente au niveau des au moins trois points de prise de pression,
le procédé comprenant les étapes suivantes :

Détermination d'une première chute de pression (310 ; 410) entre un premier et un deuxième parmi les au moins trois points de prise de pression, lesquels sont chacun soumis au produit en écoulement ;
Détermination d'une deuxième chute de pression (310 ; 410) entre deux points de prise de pression, lesquels sont chacun soumis au produit en écoulement, l'un des points de prise de pression destiné à déterminer la deuxième chute de pression étant un troisième parmi les au moins trois points de prise de pression ; et Détermination d'une valeur de la fraction massique (330) de la phase gazeuse et/ou du débit massique (460) de la phase gazeuse en fonction de la première chute de pression et de la deuxième chute de pression,

le premier point de prise de pression étant disposé en amont du bord de rupture dans le sens d'écoulement du produit, et le deuxième point de prise de pression et le troisième point de prise de pression étant tous deux positionnés derrière le bord de rupture par rapport au sens d'écoulement, le deuxième point de prise de pression étant disposé dans une partie de surface d'un solide dont le vecteur normal forme avec un axe longitudinal du tube de mesure un angle ne dépassant pas 20°, par exemple ne dépassant pas 10° et notamment ne dépassant pas 5°, et le troisième point de prise de pression étant situé dans une partie de surface d'un solide dont le vecteur normal forme avec une section transversale à travers le tube de mesure à l'emplacement du troisième point de prise de pression un angle ne dépassant pas 20°, par exemple ne dépassant pas 10° et notamment ne dépassant pas 5°, le deuxième point de prise de pression étant positionné à la position ou à proximité de la position d'un minimum de pression, de sorte que la pression au deuxième point de prise de pression ne dépasse pas 10 %, notamment ne dépasse pas 5 %, de la chute de pression entre le premier point de prise de pression et le deuxième point de prise de pression au-dessus du minimum de pression,

**caractérisé en ce que** le troisième point de prise de pression se trouve dans la direction longitudinale du tube de mesure à peu près à la même position que le deuxième point de prise de pression, et **en ce que** le troisième point de prise de pression est positionné dans la direction d'écoulement en aval du deuxième point de prise de pression à la position ou à proximité de la position d'un maximum de pression, notamment du maximum de pression le plus proche, de sorte que la pression au deuxième point de prise de pression ne représente pas plus de 6 %, notamment pas plus de 3 % de la chute de pression entre le premier point de prise de pression et le deuxième point de prise de pression en dessous du maximum de pression.

2. Procédé (300) selon la revendication 1, pour lequel la détermination de la valeur de la fraction massique de la phase gazeuse et/ou du débit massique de la phase gazeuse s'effectue sur la base d'une fonction strictement monotone d'un rapport entre la première chute de pression et la deuxième chute de pression.

3. Procédé selon la revendication 1 ou 2, comprenant en outre la détermination du débit massique de la phase gazeuse, lequel débit massique est déterminé en fonction d'au moins l'une des chutes de pression, d'une valeur de densité de la phase gazeuse, ainsi que soit de la fraction massique de la phase gazeuse, soit d'une fonction strictement monotone d'un rapport entre la première chute de pression et la deuxième chute de pression.

4. Procédé (400) selon la revendication 3, pour lequel le débit massique de la phase gazeuse est en outre déterminé en fonction du nombre de Froude du produit.

5. Procédé selon la revendication 3 ou 4, pour lequel le débit massique est déterminé comme étant proportionnel à la racine carrée du produit d'une des chutes de pression et d'une valeur de densité de la phase gazeuse du produit.

6. Procédé selon la revendication 5, pour lequel la valeur de densité de la phase gazeuse est déterminée sur la base d'une mesure de pression absolue et, le cas échéant, d'une mesure de température, notamment au premier point de prise de pression.

7. Procédé selon l'une des revendications précédentes, pour lequel un corps de plongeur est disposé dans le tube de mesure, le bord de rupture s'étendant dans un plan de section transversale du tube de mesure avec un périmètre maximal de la section transversale du corps de plongeur.

8. Capteur (100) destiné à la détermination d'une fraction massique de la phase gazeuse et/ou du débit massique de la phase gazeuse d'un produit multiphasique s'écoulant dans un tube de mesure et comportant une phase liquide et une phase gazeuse, notamment pour la mise en œuvre d'un procédé selon l'une des revendications précédentes, lequel capteur comprend :

un tube de mesure (110), lequel présente un corps de tube de mesure avec une surface d'enveloppe intérieure, laquelle surface d'enveloppe intérieure délimite un canal intérieur destiné à guider le produit en écoulement, le tube de mesure présentant une direction longitudinale Z dans laquelle le produit doit être guidé ;

un bord de rupture (126), lequel est disposé dans le canal intérieur ;

au moins trois points de prise de pression (112, 114, 116) dont les positions par rapport au bord de rupture (126) diffèrent les unes des autres ;

plusieurs capteurs de pression destinés à saisir des valeurs mesurées de pression ($p_1$) à chacun des points de prise de pression (112, 114, 116) et/ou à saisir des différences de pression ($\Delta p_1$, $\Delta p_2$) entre deux des points de prise de pression (112, 114, 116) ;

un circuit de mesure et de fonctionnement (130), lequel est configuré

pour déterminer une première chute de pression ($\Delta p_1$) entre un premier et un deuxième parmi les au moins trois points de prise de pression, lesquels sont chacun soumis au produit en écoulement ;

pour déterminer une deuxième chute de pression ($\Delta p_2$) entre deux points de prise de pression, lesquels sont chacun soumis au produit en écoulement, l'un des points de prise de pression destiné à déterminer la deuxième chute de pression étant un troisième parmi les au moins trois points de prise de pression ; et

pour déterminer une valeur de la fraction massique (X) et/ou du débit massique de la phase gazeuse du produit en fonction de la première chute de pression et de la deuxième chute de pression, en supposant un produit multiphasique contenant une phase liquide et une phase gazeuse,

le premier point de prise de pression étant disposé, par rapport à une direction longitudinale du tube de mesure, en amont du bord de rupture dans le sens d'écoulement, et

le deuxième point de prise de pression ainsi que le troisième point de prise de pression étant positionnés en aval du bord de rupture (126) dans le sens d'écoulement,

le deuxième point de prise de pression étant disposé dans une partie de surface d'un corps solide dont le vecteur normal forme avec un axe longitudinal du tube de mesure un angle ne dépassant pas 20°, par exemple ne dépassant pas 10° et notamment ne dépassant pas 5°, et

le troisième point de prise de pression étant disposé dans une partie de surface d'un corps solide dont le vecteur normal forme avec une section transversale à travers le tube de mesure à l'emplacement du troisième point de prise de pression un angle ne dépassant pas 20°, par exemple ne dépassant pas 10° et notamment ne dépassant pas 5°,

le deuxième point de prise de pression (114) étant positionné à la position ou à proximité de la position d'un minimum de pression pour un écoulement avec Re = 4 000 avec le diamètre de tube comme longueur caractéristique, de sorte que la pression au deuxième point de prise de pression ne dépasse pas 10 %, notamment ne dépasse pas 5 %, de la chute de pression entre le premier point de prise de pression et le deuxième point de prise de pression au-dessus du minimum de pression,

**caractérisé en ce que** le troisième point de prise de pression (116) se trouve dans la direction longitudinale du tube de mesure à peu près à la même position que le deuxième point de prise de pression (114), et **en ce que**

le troisième point de prise de pression est positionné en aval du deuxième point de prise de pression, à la position ou à proximité de la position d'un maximum de pression local pour un écoulement de Re = 4 000 avec le diamètre de tube comme longueur caractéristique, de sorte que la pression au deuxième point de prise de pression ne dépasse pas 6 %, notamment ne dépasse pas 3 % de la chute de pression entre le premier point de prise de pression et le deuxième point de prise de pression en dessous du maximum de pression.

**Fig. 1**

**Fig. 2**

**Fig. 3**

**Fig. 4**

**Fig. 5a**

**Fig. 5b**

## EP 4 423 462 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110259119 A1